# EUROPEAN PATENT SPECIFICATION

(11) **EP 2 437 000 B1**
(45) Date of publication and mention of the grant of the patent: **25.06.2014**
(21) Application number: 10185763.9
(22) Date of filing: 01.10.2010
(51) Int. Cl.: F24J 2/26, F24J 2/46

(54) **Optical element for solar panels**
Optisches Element für Sonnenkollektoren
Élément optique pour panneaux solaires

(43) Date of publication of application: 04.04.2012
(73) Proprietor: Sunstrip AB, 612 44 Finspång (SE)
(72) Inventor: Sundkvist, Robert, 269 36, Båstad (SE)
(74) Representative: Valea AB

(56) References cited:
- EP-A2- 1 818 625
- DE-A1- 10 106 776
- DE-U1- 20 219 221
- FR-A1- 2 427 558
- FR-A1- 2 606 495
- FR-A2- 2 441 809
- US-A- 4 538 592
- US-A- 5 894 837

## Description

### TECHNICAL FIELD

The present invention is related to an optical element for solar panels in accordance with the preamble of claim 1.

### BACKGROUND OF THE INVENTION

Solar collectors are used in order to capture solar energy. There are several different ways of capturing solar energy, using appropriate collector technology. Sunlight can be converted into electricity in solar cells or solar thermal insolation, i.e. solar radiation energy received on a given surface area in a given time, may be captured by a surface, raising its temperature, with the heat being transferred to a medium, which can be either a liquid or a gas.

The heated medium can then be used either directly, as for heating swimming pools, or indirectly via a heat exchanger. Thermal solar collectors can deliver heat for a wide range of applications, such as for heating domestic hot water and space heating. Another interesting application is to use thermal solar energy for producing cooling. Such a cooling application is particularly attractive as about 15-20 % of all world electricity is used for various types of cooling or heat pump systems, and because it is particularly in areas where insolation is high that cooling requirements are likely to be greatest.

A commonly used type of thermal solar collector is the so called flat plate solar collector. A flat plate solar collector usually consists of a thermally insulated case with a cover glass. The case contains an absorber, which absorbs the incident radiation, and which usually heats a fluid, such as e.g. a water/glycol mixture, circulated in contact with it. The cover glass and thermal insulation behind the absorber minimise heat losses to the surroundings. The heat may e.g. be transported in a closed circuit to a heat store, such as a domestic hot water tank or a hot water tank for space heating purposes, forming part of a solar energy system.

Such a previously known thermal solar collector is disclosed through FR 2 441 809 A2, which document shows a solar collector unit with a box formed by stamping, a plate of heat-conducting material, preferably copper-based, constituting the bottom of a tray which is shallower than the box and arranged in parallel to the bottom of the box and, separated from the bottom by insulation consisting of a block of rigid foam, preferably polyurethane, made by direct molding in the space defined between the molding box and the plate. The insulation in turn supports the tray. The side walls of the tray are extended outward, edges parallel to the bottom of the tray, and serving to support a transparent cover, preferably with the interposition of an adhesive. The four corners of the box are provided with gussets or steps, which are slightly recessed inside the box and capable of supporting, with the interposition of adhesive tape, the four corners of the transparent cover. Between the two faying surfaces of the gussets or steps and the edge of the transparent cover is provided with a seal, in particular a silicone seal, which is cast in the narrow gap between the edge of the transparent cover and the facing portion of the box.

Flat plate solar collectors are usually made of a sheet metal box structure, often having an aluminium frame as a stabilizing portion. An insulation material is usually inserted into this box structure to reduce heat losses from the solar collector. However, a general feature of these designs is that they comprise a plurality of points at which the heat transmission to the ambient atmosphere is great, usually due to metallic connections between the absorber and the sheet metal box structure or aluminium frame. These so-called "thermal bridges" are then usually further promoted by the commonly used metallic structures applied for mounting groups of Flat plate solar collectors at rooftop positions of buildings. Another feature of the common designs is a great demand of labour and machinery in the production which reduces the production capacity and yields high production costs. Still another frequent problem of the common designs relates to outgassing from the insulation. Outgassing means that a binding agent from the insulation is emitted as gas when the insulation is heated. These gasses then accumulate as a film at the inside of the cover glass and at the absorber. This film has a negative effect on the efficiency of the solar collector.

### SUMMARY OF THE INVENTION

An object of the present invention is to provide an improved optical element for solar panels, through which the above discussed problems are eliminated or at least reduced.

According to a first aspect of the present invention this object is achieved in accordance with claim 1.

Further embodiments are listed in the dependent claims.

It will be appreciated that features of the invention are susceptible to being combined in any combination without departing from the scope of the invention as defined by the accompany claims.

### BRIEF DESCRIPTION OF THE DRAWINGS

By way of example only, embodiments of the present invention will now be described with reference to the accompanying drawings wherein:
Figure 1 is a perspective view of a first embodiment of an optical element for solar panels;
Figure 2 is a sectional view of the optical element for solar panels of figure 1 along line A—A;
Figure 3 is a perspective view of a solar panel comprising an optical element for solar panels according to figure 1;
Figure 4 is a sectional view of the solar panel of figure 3 along line A—A;

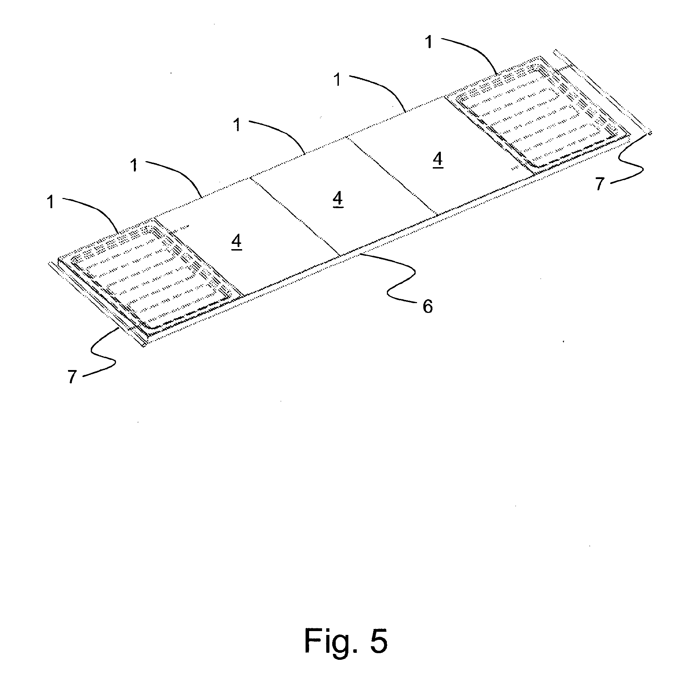

Figure 5 is a perspective view of a solar panel assembly comprising five optical elements according to figure 1.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

The present invention is based on the realization there is a need for well defined construction elements for the construction of solar panels. Through producing ready-to-use optical elements 1 for solar panels it is possible to specify and market elements having predetermined performance. This is of great advantage to whoever is in the process of designing and producing solar panels. In this way it also becomes possible to ensure the quality of the core element of solar panels in an effective manner.

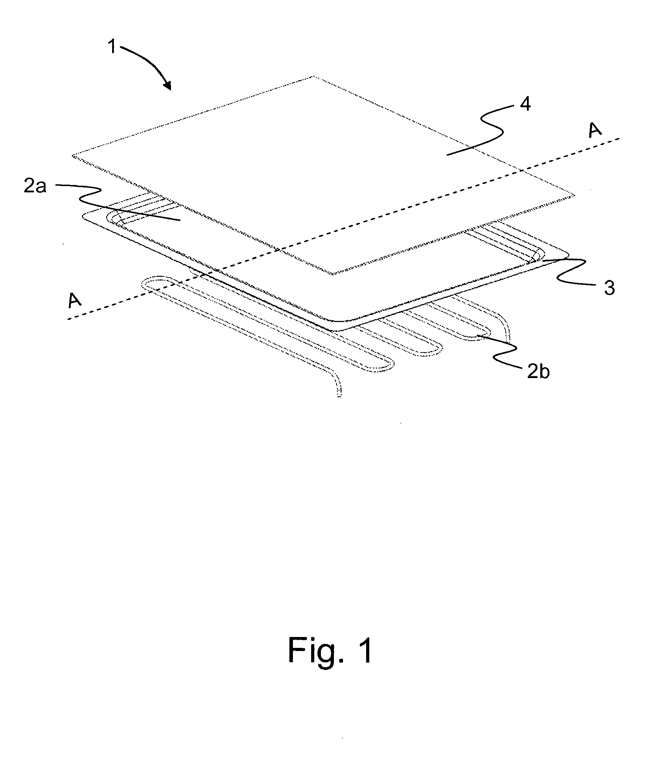

In a preferred first embodiment of the present invention, as shown schematically in figure 1, an exploded view of an optical element 1 for solar panels is illustrated. Use of the optical element 1 for solar panels in accordance with the present invention when constructing solar panels enables ease of manufacture of such solar panels.

The optical element 1 for solar panels comprises an absorber unit 2, the edges of which are raised to form an open-top box having a circumferential rim 3. The box-shaped absorber unit 2 may e.g. comprise an absorber plate 2a, usually an aluminium plate, with a metallically joined copper tube 2b for conveying the heat transfer liquid.

The absorber plate 2a has a slanting circumferential edging 2c. Such a slanting circumferential edging 2c provides for a substantially improved Incident Angle Modification (IAM) - effect. i.e. provides for a substantially improved energy absorption at low angles of inclination between the sun and the absorber plate 2a. This is especially useful if the optical element 1 for solar panels is wall mounted.

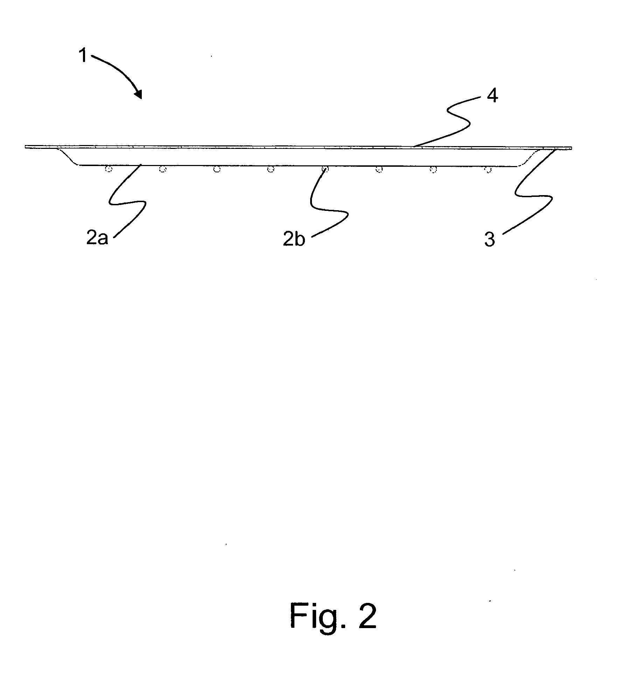

As shown in figure 2, a radiation transparent front cover 4 is connected to the box-shaped absorber unit 2 at the rim 3 sealingly enclosing the box-shaped absorber unit 2. In this way the optical element 1 for solar panels constitutes a self-supporting integral unit, which allows for a reduction of the number of components required for a solar panel arrangement as well as a reduction of the time and effort required for assembly thereof, as compared to the prior art solar panel arrangements having sheet metal box structures or aluminium frames.

The sealingly enclosed box-shaped absorber unit 2 provides for an enclosed space between the absorber plate 2a and the radiation transparent front cover 4. The sealing of this space prevents dust, moisture or gas, potentially causing film depositions on the absorber unit 2 or the radiation transparent front cover 4, from entering the enclosed space. The enclosed space also means that air-movement between the absorber plate 2a and the radiation transparent front cover 4 is minimal, which leads to a reduction of heat-losses.

The radiation transparent front cover 4 projects outwardly upon the rim 3 in this way facilitating attachment of the optical element 1 for solar panels to other structural elements. The optical element 1 for solar panels comprises the self-supporting integral absorber unit 2 and no framing from sheet metal or extruded aluminium profiles. The self-supporting integral absorber unit 2 may be produced in a number of standardized sizes in order to keep production costs to a minimum whilst allowing for flexibility in optical element 1 for solar panels sizes.

The radiation transparent front cover 4 may be made from ordinary glass or tempered glass, single or double. Various types of single or double synthetic glass may also be used, since the open-top box of the absorber unit 2 is relatively elastic and therefore able to follow the movements of the radiation transparent front cover 4 without incurring tension thereto.

If the optical element 1 for solar panels is attached to surrounding structures only using sections of the radiation transparent front cover 4 projecting outwardly of the rim 3 the absorber unit 2 will have no metallic connections to the mounting structures, thus thermalbriges are eliminated and the efficiency of the optical element 1 for solar panels improved as compared to prior art solar panels.

For attachment, the radiation transparent front cover 4 is preferably glued to the absorber unit 2 at the rim 3 such that the box-shaped absorber unit 2 is sealed essentially gas-tight. Hereby is enabled that the box-shaped absorber unit 2 is filled with a gas having lower thermal conductivity than air. Such a gas filling provides for reduced heat losses through the radiation transparent front cover 4 and thus a further improved efficiency of the optical element 1 for solar panels. The overpressure produced by the gas filling upon heating thereof also ensures that an appropriate distance between the absorber plate 2a and the radiation transparent front cover 4 is maintained, in this way preventing a deterioration of efficiency which could potentially otherwise occur. This design enables an optimization of the distance between absorber plate 2a and the radiation transparent front cover 4 to be less than for solar panels of conventional design. This design also enables that air/gasmovement between the absorber plate 2a and the radiation transparent front cover 4 is minimized, whereby heat losses are reduced.

Although this kind of gas filling is previously known, the novel design of the optical element 1 for solar panels facilitates such gas filling and thus provides for reducing the cost therefore. This is e.g. possible as the space which has to be filled with gas, as compared to prior art solar panels, has a substantially smaller volume why a smaller volume of gas is required. This also means that if the optical element 1 is integrated into a box shaped casing, this box shaped casing does not have to be gas-tight, which simplifies and makes sealing of this box less costly, e.g. at pipe through connections.

Screen printing is arranged at a side of the radiation transparent front cover 4 facing the absorber unit 2 such that it, at least partially, covers the rim 3. This screen printing should cover glued areas as well as the parts of the circumferential rim 3 of the absorber unit 2 coming into contact with the radiation transparent front cover 4. In addition to providing an agreeable appearance to the optical element 1 for solar panels this screen printing has the technical effect of providing UV protection for the glue used to affix the radiation transparent front cover 4 to the absorber unit 2. The screen printing also contributes to the thermal performance of the optical element 1 for solar panels.

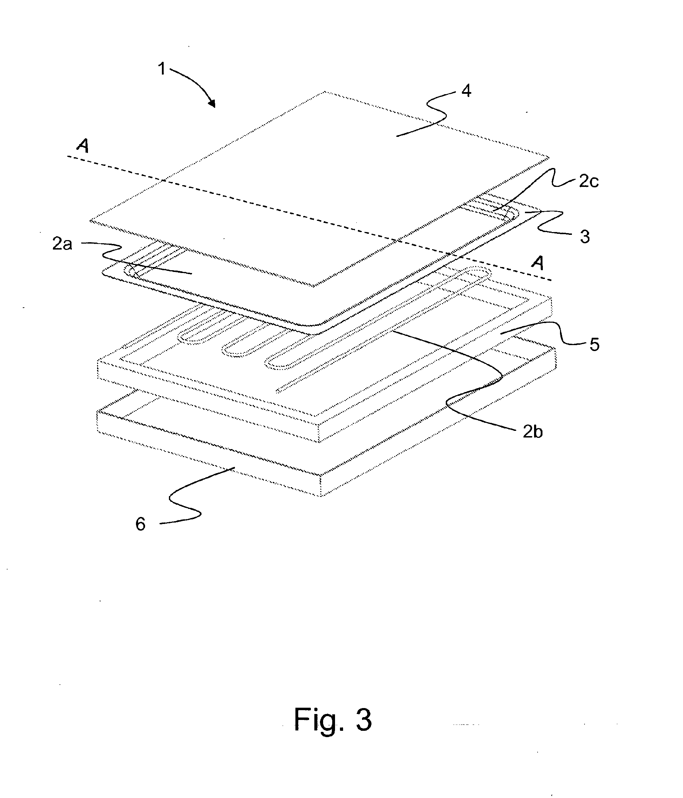

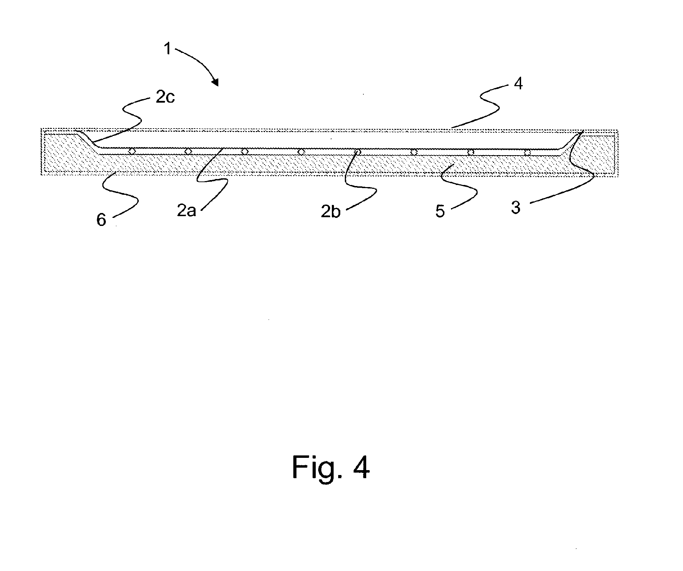

In one embodiment, as illustrated in figures 3 and 4, the absorber unit 2 is placed in a framing enclosure 6, e.g. an aluminium box 6 solar panel housing 6 which also contains insulation 5, thus forming a solar panel. The absorber unit 2 may be glued to the framing enclosure 6 or alternatively attached thereto using a rubber strip. In this embodiment the absorber unit 2 provides a diffusion seal that prevents outgassing from the insulation 5, which is a known problem occurring in solar panels. Outgassing means that the binding agent from the insulation is emitted as gas when the insulation is heated. These gasses, in prior art solar panels, then accumulate as a film at the inside of the radiation transparent front cover and at the absorber unit. Such a film has a negative effect on the efficiency of the solar panels.

In accordance with the present invention is also envisaged a solar panel assembly 8, comprising a plurality of optical elements 1 as described above. Such a solar panel assembly 8 comprising five optical elements 1 placed in a common framing enclosure 6, e.g. an aluminium box 6 common solar panel housing 6 which also contains insulation 5, is shown. For illustrative purposes the outermost optical elements 1 are illustrated with partial transparency. In the configuration illustrated the optical elements 1 are connected to each other in series and terminated at connecting piping 7.

Thus, the above describes optical elements 1 for solar panels enables local production of high performance solar absorbers of high quality without incurring problems such as outgassing or moisture related problems. Also, the essentially flat nature of the above described optical elements 1 for solar panels enables a reduction of freight volumes as compared to fully assembled solar panels, whereby the optical elements 1 for solar panels may be shipped efficiently to local producers of solar panels.

The performance of the optical elements 1 for solar panels as described above are further determined by design choices such as: the reflection and absorption of the glass used for the radiation transparent front cover 4, the absorption and emission from the surface of the absorber plate 2a, the heat removal factor of the element (heat-losses), the distance between the radiation transparent front cover 4 and the absorber plate 2, and also the composition of the gas used in the space between the radiation transparent front cover 4 and the absorber plate 2.

Modifications to embodiments of the invention described in the foregoing are possible without departing from the scope of the invention as defined by the accompanying claims.

Expressions such as "including", "comprising", "incorporating", "consisting of', "have", "is" used to describe and claim the present invention are intended to be construed in a nonexclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. An optical element (1) for solar panels, the optical element (1) comprising an absorber unit (2) with an absorber plate (2a), the edges of which are raised to form an open-top box having a circumferential rim (3); and a radiation transparent front cover (4) connected directly to the absorber unit (2) at the rim (3) sealingly enclosing the box-shaped absorber unit (2) such that the optical element (1) is a self-supporting integral unit ***characterised in that** the absorber plate (2a) has* a *slanting circumferential edging (2c) and **in that*** the radiation transparent front cover (4) projects outwardly of the rim (3) facilitating attachment of the optical element (1) to a solar panel housing (6) without creating thermal-bridges.

2. The optical element (1) according to claim 1, **characterised in that** the radiation transparent front cover (4) is glued to the absorber unit (2) at the rim (3) such that the box-shaped absorber unit (2) is sealed essentially gas-tight.

3. The optical element (1) according to claim 2, **characterised in that** the box-shaped absorber unit (2) is filled with a gas having lower thermal conductivity than air.

4. The optical element (1) according to any one of claims 1 to 3, **characterised in that** screen printing is arranged at a side of the transparent front cover (4) facing the absorber unit (2) at least partially covering the rim (3).

5. A solar panel housing (6), **characterised in that** it comprises an optical element (1) according to any one of claims 1 to 4 arranged in the solar panel housing (6), wherein the absorber unit (2) is backed by an insulation (5).

6. A solar panel arrangement (8), **characterised in that** it comprises a plurality of optical elements (1) according to any one of the preceding claims.

7. The solar panel arrangement (8) of claim 6, **characterised in that** it further comprises insulation 5 backing the plurality of optical elements (1).

8. The solar panel arrangement (8) of claim 7, **characterised in that** the plurality of optical elements (1) and the insulation 5 backing the plurality of optical elements (1) are arranged in a common solar panel housing 6.

## Patentansprüche

1. Optisches Element (1) für Solarpanel, wobei das optische Element (1) eine Absorbierungseinheit (2) mit einer Absorbierungsplatte (2a), deren Ränder erhöht sind, um einen Kasten mit einer offenen oberen Seite auszubilden, welcher einen Umfangsrand (3) aufweist; und eine bezüglich Strahlung transparente vordere Abdeckung (4), welche direkt mit der Absorbierungseinheit (2) an dem Rand (3) verbunden ist, umfasst, wobei die kastenförmige Absorbierungseinheit (2) abdichtend eingeschlossen ist, so dass das optische Element (1) eine sich selbst haltende integrale Einheit ist, **dadurch gekennzeichnet, dass** die Absorbierungsplatte (2a) eine schräg stehende Umfangseinfassung (2c) aufweist, und dass die bezüglich Strahlung transparente vordere Abdeckung (4) von dem Rand (3) nach außen ragt, wobei ein Anbringen des optischen Elements (1) an einem Solarpanel-Gehäuse (6) ermöglicht wird, ohne Wärmebrücken zu erzeugen.

2. Optisches Element (1) nach Anspruch 1, **dadurch gekennzeichnet, dass** die bezüglich Strahlung transparente vordere Abdeckung (4) mit der Absorbierungseinheit (2) an dem Rand (3) verklebt ist, so dass die kastenförmige Absorbierungseinheit (2) im Wesentlichen gasdicht abgedichtet ist.

3. Optisches Element (1) nach Anspruch 2, **dadurch gekennzeichnet, dass** die kastenförmige Absorbierungseinheit (2) mit einem Gas gefüllt ist, welches eine geringere Wärmeleitfähigkeit als Luft aufweist.

4. Optisches Element (1) nach einem der Ansprüche 1 bis 3, **dadurch gekennzeichnet, dass** ein Siebdrucken an einer Seite der transparenten vorderen Abdeckung (4), welche der Absorbierungseinheit (2) gegenüberliegt und zumindest teilweise den Rand (3) abdeckt, ausgeführt ist.

5. Solarpanel-Gehäuse (6), **dadurch gekennzeichnet, dass** es ein optisches Element (1) nach einem der Ansprüche 1 bis 4 umfasst, welches in dem Solarpanel-Gehäuse (6) angeordnet ist, wobei die Absorbierungseinheit (2) durch eine Isolierung (5) gestützt wird.

6. Solarpanel-Anordnung (8), **dadurch gekennzeichnet, dass** sie mehrere optische Elemente (1) nach einem der vorhergehenden Ansprüche umfasst.

7. Solarpanel-Anordnung (8) nach Anspruch 6, **dadurch gekennzeichnet, dass** sie darüber hinaus eine Isolierung (5) umfasst, welche die mehreren optischen Elemente (1) stützt.

8. Solarpanel-Anordnung (8) nach Anspruch 7, **dadurch gekennzeichnet, dass** die mehreren optischen Elemente (1) und die Isolierung (5), welche die mehreren optischen Elemente (1) stützt, in einem gemeinsamen Solarpanel-Gehäuse (6) angeordnet sind.

## Revendications

1. Elément optique (1) pour panneaux solaires, l'élément optique (1) comprenant une unité absorbante (2) dotée d'une plaque absorbante (2a), dont les bords sont relevés pour former une boîte ouverte sur le dessus ayant un rebord circonférentiel (3) ; et un couvercle frontal transparent aux rayonnements (4) relié directement à l'unité absorbante (2) au niveau du rebord (3) fermant hermétiquement l'unité absorbante en forme de boîte (2) de telle sorte que l'élément optique (1) soit une unité intégrée auto-supportée, **caractérisé en ce que** la plaque absorbante (2a) comporte une bordure circonférentielle inclinée (2c) et **en ce que** le couvercle frontal transparent aux rayonnements (4) fait saillie vers l'extérieur du rebord (3), facilitant la fixation de l'élément optique (1) à un logement de panneau solaire (6) sans créer de ponts thermiques.

2. Elément optique (1) selon la revendication 1, **caractérisé en ce que** le couvercle frontal transparent aux rayonnements (4) est collé à l'unité absorbante (2) au niveau du rebord (3), de telle sorte que l'unité absorbante en forme de boîte (2) soit fermée d'une manière sensiblement étanche aux gaz.

3. Elément optique (1) selon la revendication 2, **caractérisé en ce que** l'unité absorbante en forme de boîte (2) est remplie d'un gaz ayant une conductivité thermique inférieure à l'air.

4. Elément optique (1) selon l'une quelconque des revendications 1 à 3, **caractérisé en ce qu'**une sérigraphie est agencée sur un côté du couvercle frontal transparent (4) faisant face à l'unité absorbante (2), en recouvrant au moins partiellement le rebord (3).

5. Logement de panneau solaire (6), **caractérisé en ce qu'**il comprend un élément optique (1) selon l'une quelconque des revendications 1 à 4, et agencé dans le logement de panneau solaire (6), dans lequel l'unité absorbante (2) est équipée par derrière avec une isolation (5).

6. Agencement de panneaux solaires (8), **caractérisé en ce qu'**il comprend une pluralité d'éléments optiques (1) selon l'une quelconque des revendications précédentes.

7. Agencement de panneaux solaires (8) selon la revendication 6, **caractérisé en ce qu'**il comprend en outre l'isolation (5) qui équipe par derrière la pluralité d'éléments optiques (1).

8. Agencement de panneaux solaires (8) selon la revendication 7, **caractérisé en ce que** la pluralité d'éléments optiques (1) et l'isolation (5) qui équipe par derrière la pluralité d'éléments optiques (1) sont agencés dans un logement de panneaux solaires commun (6).
